# EUROPÄISCHE PATENTSCHRIFT

(11) **EP 1 641 609 B1**
(45) Veröffentlichungstag und Bekanntmachung des Hinweises auf die Patenterteilung: **16.04.2008**
(21) Anmeldenummer: 05714977.5
(22) Anmeldetag: 16.02.2005
(51) Int. Cl.: B29C 51/16, B65B 53/06, B65D 23/08, B29C 35/04

(54) **VERFAHREN UND VORRICHTUNG ZUR SEITENWANDDEKORATION VON VERPACKUNGSBEHÄLTNISSEN**
METHOD AND DEVICE FOR DECORATING THE LATERAL WALLS OF PACKAGING CONTAINERS
PROCEDE ET DISPOSITIF PERMETTANT DE DECORER LES PAROIS LATERALES DE CONTENANTS D'EMBALLAGE

(30) Priorität: 27.02.2004 DE 102004009483; 31.08.2004 DE 102004041949
(43) Veröffentlichungstag der Anmeldung: 05.04.2006
(73) Patentinhaber: Hassia Verpackungsmaschinen GmbH, D-63691 Ranstadt (DE)
(72) Erfinder: WALTER, Peter, 63683 Ortenberg (DE); KURTH, Gunter, 63691 Ranstadt (DE); WAGNER, Wolfgang, 63667 Nidda (DE); GRUSDT, Rainer, 63654 Büdingen (DE); LOTH, Kay, 61209 Echzell (DE)
(74) Vertreter: Wolf, Günter
(86) Internationale Anmeldenummer: PCT/DE2005/000259
(87) Internationale Veröffentlichungsnummer: WO 2005/082601

(56) Entgegenhaltungen:
- DE-A1- 19 859 063
- DE-C1- 10 023 658
- FR-A- 2 793 185
- FR-A- 2 822 132

## Beschreibung

### Hintergrund der Erfindung

### 1. Feld der Erfindung

Die Erfindung betrifft ein Verfahren und Vorrichtungen zur Seitenwand-Dekoration von per Tiefziehen bzw. Thermoformen im Schritttakt an einer Packstoffbahn in mindestens einer in Förderrichtung erstreckten Längsreihe ausgeformten Verpackungsbehältnissen, wie Becher od.dgl.

### 2. Beschreibung des Standes der Technik

Die Rundumdekorausstattung von Verpackungen, wie Flaschen mittels aufschrumpfbaren, thermoplastisch verformbaren Folienschlauchstücken ist bspw. nach der DE-A-198 59 063 bekannt wobei Streifen aus thermoplastischen Kunststoff mit ihren Endrändern zusammengefügt und damit zu einem Schlauchstück ausgebildet werden, um diese Schlauchstücke über die Flaschen zu stülpen und mittels Wärmebeaufschlagung auf diese aufzuschrumpfen. Abgesehen davon daß nach der FR-A-2822132 fertige Schlauchstücke zur Verwendung kommen, werden auch diese ebenfalls nach ihrem Aufstülpen durch Wärmebeaufschlagung aufgeschrumpft.
Bei der Seitenwanddekoration von Bechern wird die Seitenwand mit einer im Wesentliche zylindrischen, unter Wärmebeaufschlagung an die Behältnisform anschrumpfbaren Dekorhülsen bzw. so genannten Sleeves durch Aufstülpen von unten umfaßt, und die Sleeves werden vor dem Aufschrumpfen mit ihrem oberen Rand am Behältnis unterhalb der Packstoffbahnerstreckungsebene fixiert. Nachfolgend wird der Einfachheit halber statt Verpackungsbehältnis der Begriff Becher verwendet.
Die Dekorausstattung von Bechern aus Kunststoff mittels unter Wärmeeinwirkung aufschrumpfbarer Sleeves ebenfalls aus Kunststoff ist mittels so genannter Sleever bekannt, für die ein druckschriftlicher Nachweis nicht erbracht werden kann. Die in der Regel schwach konischen Becher werden in separater Einzelfolge oder an einer Packstoffbahn zusammenhängend in Überkopfstellung unter solchen Sleevern mit hoher Geschwindigkeit vorbeigeführt. Die Becher werden dabei mit den von einem zunächst ausgeflacht von einer Vorratsrolle kommenden Dekorfolienschlauch abgetrennten Hülsenstücken (Sleeves) entsprechender Länge von oben her überstülpt.
Diese Sleeves werden danach in einem relativ langen Heißluft führenden Schrumpftunnel an den Becher konturgenau angeschrumpft und dann mit den Bechern der Weiterverarbeitung zugeführt. Dieses Aufstülpen von Sleeves ist bei am Strang tiefgezogenen Bechern nicht möglich, da die Becher bezogen auf die Packstofbahnebene nach unten ausgeformt sind.

Mit der Dekoration von Bechern ganz allgemein mit ring- bzw. hülsenförmigen Etiketten befaßt sich bspw. die DE-A-100 23 658 Cl. Dabei ist auch die Verwendung von Dekorhülsen aus unter Wärmeeinwirkung aufschrumpfbaren Kunststoff in Betracht gezogen. Diesbezüglich ist allerdings außer einem Hinweis auf eine Heizeinrichtung nichts näheres erläutert. Dies läßt den Schluß zu, daß dafür ebenfalls nur ein entsprechend langer Heißluft-Schrumpftunnel in Betracht gezogen ist.
Soweit bekannt, ist diese Methode, zumindest was dabei die mit angesprochenen, aufschrumpfbaren Dekorhülsen betrifft, aus welchen Gründen auch immer, noch nicht in die Praxis umgesetzt worden, d.h., vermutlich deshalb nicht, weil mit der Übergabe der Dekorhülsen durch Greifer zum Einen der hohen Taktzahl, mit der moderne Tiefziehmaschinen betrieben werden, nicht genügt werden kann, und weil zum Anderen wie beim vorerwähnten Überkopfsleeven ein entsprechend langer Heißluft-Schrumpftunnel erforderlich ist, der die per se relativ langen Tiefziehmaschinen noch weiter verlängern würde. Auch bzgl. der Heizmediumsart ist in der DE-A-100 23 658 nichts offenbart und auch nicht, wie die Wärmeübertragung an die aufgestülpten Dekorhülsen tatsächlich erfolgen soll.
Diesbezüglich ist in Verbindung mit einer einschlägigen, aber druckschriftlich nicht belegbaren Verpackungsmaschine bekannt geworden, neben der Verwendung von Heißluft auch die Verwendung von wasserdampf für das Aufschrumpfen von Dekorhülsen in Betracht zu ziehen.
Beim Versuch, diese letztgenannte Bedampfungsmethode nachzuvollziehen, hat sich gezeigt, daß diese aus zwei Gründen nicht ohne weiteres praktikabel ist:
Zum Einen ist auch damit der hohen Taktschrittgeschwindkeit einer modernen Tiefziehnmaschine nicht zu genügen und zum Anderen tritt an den mit Dampf behandelten Verpackungen ein beträchtlicher und gegf. nur durch Nachtrocknung zu behebender Kondensatanfall auf, der insbesondere dann nicht hinnehmbar ist, wenn die Dekoranbringung per Schrumpffolie an noch nicht gefüllten und abgedeckelten Behältnissen bzw. Bechern erfolgt, in denen sich ebenfalls Kondensat niederschlagen kann.

### Zusammenfassung der Erfindung

Der Erfindung liegt die Aufgabe zugrunde, ein Verfahren und zu dessen Durchführung geeignete Vorrichtungen zu schaffen, mit denen die unter bekannter Wärmezufuhr erfolgende Aufschrumpfung der an den Bechern applizierten Sleeves unter Aufrechterhaltung hoher Schritttaktzahl der beteiligten Thermoform- bzw. Tiefziehmaschine durchführbar ist, verbunden mit der Maßgabe, dabei Kondensatanfall weitestgehend auszuschließen und den Aufschrumpfvorgang in der maschinenbedingt vorgegebenen kurzen Schritttaktzeit durchzuführen, d.h., also ohne Passage eines entsprechend langen Schrumpftunnels.

Diese Aufgabe ist hinsichtlich des Verfahrens nach der Erfindung durch die im unabhängigen Patentanspruch 1 angeführten Schritte gelöst.

Die Maßgabe "mindestens einer Bedampfungs- und Aufschrumpfphase zugeführt wird" ist so zu verstehen, daß, im Schritttakt bleibend, an einer Folgestelle und entsprechend zeitversetzt, d.h., etwas später, die Bedampfungs- und Aufschrumpfphase unter den gleichen Bedingungen an der bereits in der ersten Phase erfolgten Vorschrumpfung wiederholt wird. Damit kann evtl. unterschiedlichem Schrumpfverhalten des Hülsenmaterials Rechnung getragen werden, wenn dieses bspw. in einer ersten Phase noch nicht voll aufgeschrumpft sein sollte.

Mit dem erfindungsgemäßen Verfahren sind also zunächst offenbar nicht vereinbare Aspekte, nämlich hohe Zahl der Verarbeitungsschritttakte und relativ lange Wärmeeinwirkungszeit für den Aufschrumpfvorgang durch die gezielte Verwendung von überhitztem Dampf vereinbar geworden. Dies allein macht die Erfindung allerdings noch nicht aus, sondern hinzukommt noch, daß zum Einen der überhitzte Dampf nur impuls- bzw. blitzartig zwischen zwei Schritttakten zur Einwirkung gebracht und dabei zum Anderen gleichzeitig und unter Ausnutzung der aufgeschobenen Dekorhülse als Abschirmung dafür gesorgt wird, daß durch die hohe Dampftemperatur keine Beeinträchtung der Becher selbst erfolgt.
Außerdem kommt noch hinzu, daß beim erfindungsgemäßen Verfahren die Phase einerseits des Applizierens und Fixierens der Sleeves und andererseits die Phase des Aufschrumpfens, lokal gesehen, nacheinander erfolgen, d.h., daß das Aufschrumpfen bspw. erst einen Taktschritt der Packstoffbahn weiter bzw. später durchgeführt wird, was wiederum bedeutet, da beide Phasen zwar gleichzeitig aber an anderer Position des jeweiligen Bechers erfolgen, daß Zeit gegenüber dem Zeitbedarf eingespart wird, der erforderlich wäre, wenn beide Phasen in der gleichen Position des betreffenden Bechers vollzogen würden.

Wie die damit erfolgreich durchgeführten Versuche gezeigt haben, ist dieses verfahren auch an bereits gefüllten und abge deckelten Bechern durchführbar, wobei die Bedampfungsphase zum Aufschrumpfen dann hinter der Füll- und Schließstation durchzuführen ist. Bevorzugt wird dabei die Aufschrumpfung an bereits gefüllten Bechern, da das Füllgut einen gewissen Kühleffekt für die Becher hat.

Bei der erfindungsgemäß vorgesehenen Verwendung von so genannten Sleevern und den von diesen erzeugten Sleeves kann deren Eigenspannung für die Fixierung der Dekorhülsen mit ausgenutzt werden, die sich dadurch ergibt, daß die Sleeves, da sie von einem von einer Vorratsrolle kommenden ausgeflachten Schlauch abgeschnitten werden und im Moment des Aufstülpens, im Querschnitt gesehen, zwar schon weitestgehend Kreisform haben, dabei aber immer noch faltungsbedingt Zweiecke bilden, die sich unter einer gewissen Eigenspannung mit ihrem oberen Rand haftend am Becher anlegen.
Um bzgl. der Fixierung aber ganz sicher zu gehen, kann jedoch eine Weiterbildung diesbezüglich auch darin bestehen, zumal per se für das eigentliche Aufschrumpfen überhitzter Dampf an der Maschine zur Verfügung steht, daß die Fixierung des oberen Randbereiches der Sleeves am Becher unterhalb der Packstoffbahnebene mit kurzzeitig zur Einwirkung gebrachten, überhitztem Dampf bewirkt wird, und zwar sobald der Randbereich der Sleeves am Becher von unten her in Position gebracht ist, um zunächst nur die notwendige kleine Durchmesserreduzierung an den Dekorhülsen an deren oben zur festen Anlage am Becher zu bringenden Rand zu bewirken. Statt einer solchen Dampfbeaufschlagung dieser Randbereiche wird jedoch eine kurzzeitige Beaufschlagung mit einfacher zu handhabender Heißluft angewandt, deren Wärmekapazität im Gegensatz zum später nachfolgenden kompletten Aufschrumpfen der Dekorhülsen für den Zweck lediglich der Hülsenfixierung ausreichend ist und in diesem Falle auch dafür, daß für die Fixierung die Sleeves an ihrem inneren oberen Rand mit einer Hotmeltbeschichtung versehen sein sollten.

Was die Vorrichtungen zur Durchführung dieses Verfahrens betrifft, so ist diese, und zwar ausgehend von einer Ausbildung der Vorrichtung gemäß Oberbegriff des Anspruches 5 nach der Erfindung gemäß der Merkmale im Kennzeichen des unabhängigen Patentanspruches 5 ausgebildet. Eine demgegenüber etwas abgewandelte Ausführungsform der Vorrichtung zur Durchführung des Verfahrens ergibt sich nach dem ebenfalls unabhängigen Anspruch 9. Diesbezüglich und auch bzgl. des Verfahrens vorteilhafte Weiterbildungen ergeben sich nach den jeweils abhängigen Patentansprüchen.

Die Größe der Bedampfungskammer richtet sich danach, wieviele Becherreihen bei einem Takt in der Tiefziehstation ausgeformt werden, was noch näher erläutert wird. Sofern außerdem längs der Förderstrecke hintereinander zwei Bedampfungskammern vorgesehen sind, so ist die nachgeschaltete um einen Schritttakt distanziert hinter der vorangehenden anzuordnen.

### Kurze Beschreibung der Zeichnungen

Das erfindungsgemäße Verfahren, die Vorrichtungen bzw. Einrichtungen zu seiner Durchführung und vorteilhafte Weiterbildungen werden nachfolgend anhand der zeichnerischen Darstellung von Ausführungsbeispielen näher erläutert.
Es zeigt
- Fig.1: stark schematisiert in Seitenansicht eine FFS-Verpackungsmaschine mit Einrichtungen zum Aufschrumpschrumpfen von Dekorhülsen an noch leeren Bechern einer zusammenhängenden Packstoffbahn;
- Fig.2: eine der Fig.1 entsprechende Darstellung, wobei die Dekorfolienhülsen an bereits gefüllten und verschlossenen Bechern erfolgt;
- Fig.3,4: schematisch die quer zur Packstoffbahn orientierten Einrichtungen zur Applikation der Dekorhülsen an den als Becher dargestellten Verpackungsbehältnissen;
- Fig.5: stark schematisiert den Übergabebereich der Dekorhülsen an die Verpackungsbehältnisse der Packstoffbahn gemäß der Fig.3,4 in Draufsicht;
- Fig.6,6A-8: schematisch und in Durchlaufrichtung der Packstoffbahn gesehen die Schrumpfstation mit ihrer Bedampfungkammer ;
- Fig.9: eine Querreihe von Bechern mit den aufgeschrumpften Dekorfolienhülsen;
- Fig.10: eine Ansicht der Bedampfungskammer von oben.
- Fig.11: schematisch eine Draufsicht auf eine FFS-Verpackungs maschine mit ihren Stationen und den Einrichtungen zur Rundumdekoration in einer etwas anderen Ausführungsform;
- Fig.12A-12C: ein Stück Packstoffbahn mit einem daran ausgeformten Becher und einem darunter dargestellten und aufzuschrumpfenden, ringzylindrischen Sleeve;
- Fig.13A,B: in Seitenansicht eine andere Ausführungsform eines Bechers;
- Fig.14: eine perspektivische Darstellung des Quertransporteurs für die Sleeves;
- Fig.15: in Förderrichtung der Packstoffbahn gesehen, eine Becherquerreihe im Übergabebereich mit noch nicht übergebenen Sleeves;
- Fig.16: die Darstellung gemäß Fig.15 mit an die Becher übergebenen Sleeves;
- Fig.17: schematisch in Förderrichtung der Packstoffbahn gesehen, die Einrichtung zum Fixieren der Sleeves an den Bechern;
- Fig.18: eine Draufsicht auf die Einrichtung gemäß Fig.17;
- Fig.19: perspektivisch eine besondere Ausführungsform der Fixiereinrichtung und
- Fig.20: perspektivisch die Bedampfungskammer zum Aufschrumpfen der Sleeves.

### Beschreibung der bevorzugten Ausführungsformen

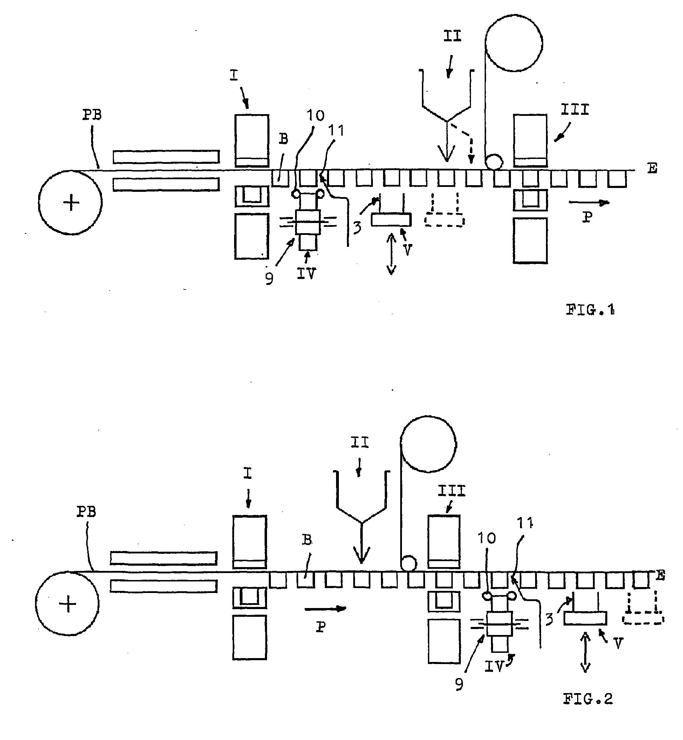

Bezüglich des Verfahrens ist unter Bezug auf Fig.1 bis 4 davon ausgegangen, daß zur Seitenwand-Dekoration von per Tiefziehen im Schritttakt an einer Packstoffbahn PB in bspw. sechs bzw. vier in Förderrichtung P erstreckten Längsreihe R ausgeformten Bechern B deren Seitenwände S ringsum mit einer im Wesentlichen zylindrischen, unter Wärmebeaufschlagung an die Behältnisform anschrumpfbaren Dekorfolienhülse DH bzw. Sleeve umfaßt sind.

Die jeweilige Dekorhülse DH ist mit ihrem oberen Rand am jeweiligen Becher B unterhalb der Packstoffbahnerstreckungsebene E fixiert, welche Fixierung vor dem eigentlichen Aufschrumpfen erfolgt.

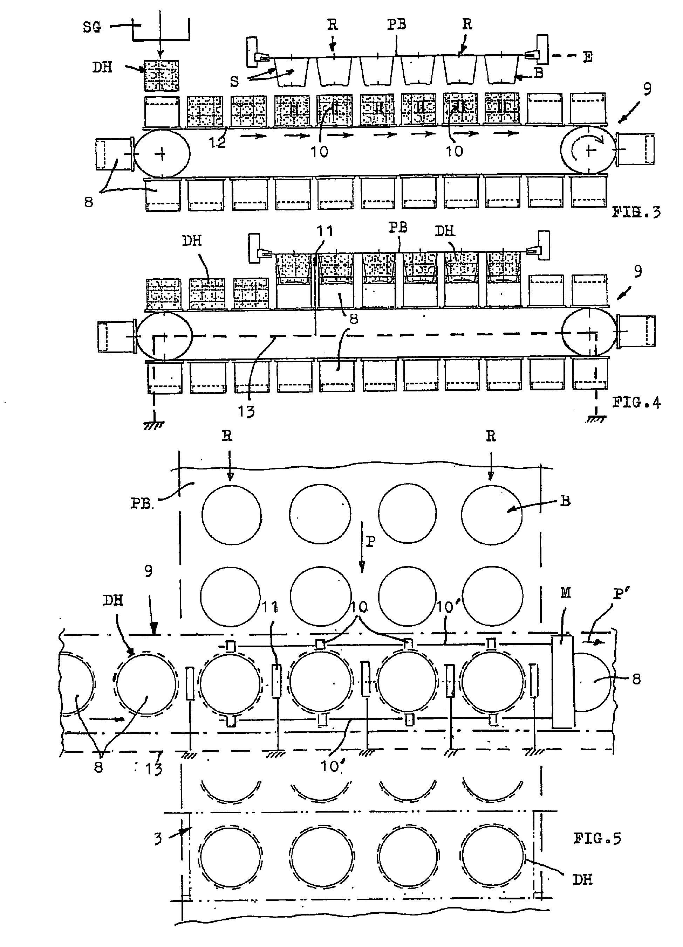

Das so genannte und bekannte Sleevergerät SG, das die Dekorhülsen DH bzw. Sleeves aus unter Wärmeeinwirkung schrumpfbaren Material liefert, ist in Fig.3 nur schematisch am dort verkürzt dargestellten Quertransporteur 9 mit angedeutet und bedarf keiner näheren Erläuterung, da derartige Sleevergeräte hinlänglich bekannt und in Benutzung sind.

Was die Vorrichtung zur Durchführung des Verfahrens betrifft, so besteht diese ebenfalls und in bekannter Weise unter Verweis auf Fig.1 aus einer FFS-Verpackungsmaschine mit entsprechenden Bearbeitungsstationen für die im Schritttakt durchzufördernde Packstoffbahn PB, d.h. **F**ormstation I, **F**üllstation II, **S**chließstation III und aus Einrichtungen zur Anbringung der Sleeves DH. Die Darstellungen in den Fig.1 und 2 unterscheiden sich nur dadurch, daß bei der Vorrichtung nach Fig.2 die Anbringung der Sleeves DH an bereits gefüllten und abgedeckelten Bechern B erfolgt.

In den Zeichnungen sind übrigens alle mechanischen Elemente, wie Maschinengestelle, Förderelemente für die Packstoffbahn, Antriebselemente für die Querförderer, Verstellmechaniken für auf und ab bewegbare Maschinenteile, Betriebsmittelzuleitungen, Steuerungen usw. nicht dargestellt, da es sich dabei um im Verpackungsmaschinenbau bekannte Elemente handelt, die insoweit auch keiner näheren Erläuterung bedürfen.

Für das einleitend genannte Verfahren ist wesentlich, daß nach der Anbringung und Fixierung der Sleeves DH, was noch näher erläutert wird, die Becher B mit ihren Sleeves DH im Schritttakt einer nachfolgenden Bedampfungs- und Aufschrumpfphase zugeführt werden. In dieser Phase werden unter Abschirmung des Bechers B und des Zwischenraumes 5 zwischen Bechern B und Sleeves DH während der zeit zwischen zwei Förderschritttakten die Sleeves DH auf ihrer Außenfläche mit überhitztem Dampf beaufschlagt und damit auf die Becher B aufgeschrumpft. In diesem Zusammenhang sei ausdrücklich darauf hingewiesen, daß die Bedampfungs- und Aufschrumpfphase, und zwar bezogen auf einen Becher B, in dessen nachfolgender, in Förderrichtung P der Packstoffbahn PB weitergerückter Position nach der Sleeveanbringung und -fixierung erfolgt.

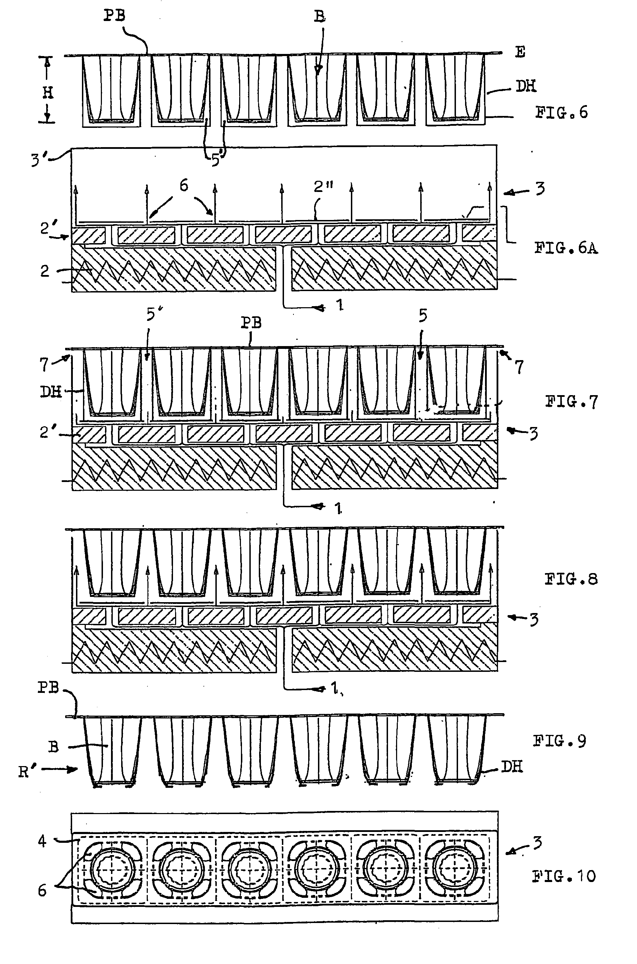

Um diese Verfahrensweise durchzuführen und ausgehend von einer Vorrichtung der kurz vorbeschriebenen Art, ist für diese Vorrichtung unter Verweis auf insbesondere die Fig.6 bis 8 wesentlich, daß den vor (FIG.1) oder nach (Fig.2) der Füllstation II angeordneten Einrichtungen IV zur Anbringung der Sleeves DH mindestens eine Bedampfungs- und Schrumpfstation V nachgeschaltet ist, die aus mindestens einer mit einer Dampfzufuhr 1 versehenen, mindestens eine mit Sleeves DH bestückte Becherquerreihe mit Spiel umschließenden Bedampfungskammer 3 gebildet ist. Im Boden 4 (siehe Fig. 10) der Bedampfungskammer 3 sind pro Becher B periphär in den Zwischenraum 5 zwischen den mit Sleeves DH bestückten Bechern B gerichtete und den ganzen Spaltraum erfassende Öffnungen 6 angeordnet. Dabei ist die im Wesentlichen um die Höhe H des Bechers B auf und ab bewegbare Bedampfungskammer 3 in eine Endstellung zur Packstoffbahnebene E anhebbar ausgebildet, bei der die Bedampfungskammer 3 mit ihrem oberen Rand 3' und der Packstoffbahn PB einen Dampfabströmringspalt 7 (Fig.7) bildet. Fig.10 zeigt eine solche Bedampfungskammer 3 in Draufsicht, die bspw. für die Erfassung einer Becherquerreihe mit sechs Bechern B ausgelegt ist, d.h., in diesem Falle werden in der Tiefziehstation I sechs Längsreihen R von Bechern B in der Packstoffbahn PB im Schritttakt ausgeformt. Die eventuelle Anordnung einer zweiten Bedampfungskammer 3 aus den einleitend genannten Gründen in der Förderstrecke der Packstoffbahn PB ist in den Fig.1,2 gestrichelt mit angedeutet.

Um den in den durch den Dampfanschluß 1 der Bedampfungskammer 3 zugeführten Dampf zu überhitzen, sind, wie aus Fig.6A bis 8 ersichtlich, im mit dem Dampfanschluß 1 versehenen Bodenbereich der Bedampfungskammer 3 Heizelemente 2 angeordnet, über denen sich eine gelochte zwischenplatte 2' und ferner eine mit den vorerwähnten Öffnungen 6 versehene Heißdampfführungsplatte 2" befindet. Durch diese labyrinthartige Dampfführung wird einerseits für eine ausreichende Überhitzung des Dampfes und andererseits für eine weitestgehend gleichmäßige Dampfverteilung in der Bedampfungskammer 3 gesorgt. Dabei ist zu berücksichtigen, daß moderne FFS-Maschinen abhängig von der Größe der Becher B und insbesondere mit Rücksicht auf bspw. gängige Joghurtbecherformate in der Regel mit mehreren Längsreihen R von Bechern B in der Packstoffbahn PB gefahren werden.
Davon gehen auch die Darstellungen der Fig.3,4 aus, die den verkürzt dargestellten Quertransporteur 9 für die Sleeves DH schematisch verdeutlichen. Hierbei handelt es sich um einen, bezogen auf die Becherzahl in einer Querreihe, mit einer Vielzahl von Hülsenaufnahmen bzw. Dornen 8 bestückten Endlosförderer 12, mit dem diese quasi -Aufsteckdorne 8 bildenden Hülsenaufnahmen mit hoher, d.h., der Arbeitsgeschwindigkeit des Sleevers SG angepaßter Geschwindkeit unter diesem Sleever in Sechsergruppen getaktet vorbeigeführt, mit den Sleeves DH beladen und in Position gemäß Fig. 3 unter eine Querreihe von Bechern B gefahren. Der Abzug der Hülsen DH von ihren Aufnahmen 8 und deren Übergabe an die Becher B erfolgt gemäß Fig.5 mit an die Sleeves DH gesteuert anleg- und drehbaren Transportrollen 10, die minimalen kinematischen Aufwand darstellen und zeitsparend arbeiten. Sobald die Sleeves DH gemäß Fig.5 ihre Position am Becher B erreicht haben und die Rollen 10 stillstehen, werden die Sleeves DH nur unmittelbar unter der Packstoffbahnebene E mit einem entsprechend gesteuerten Heißluftbreitstrahl am Becher angeschrumpft, wofür am Gestell 13 des Quertransporteurs 9 mit vorzugsweise Heißluft gesteuert beschickbare, kleine Breitschlitzeröhrchen 11 (siehe Fig.1,2 u.5) vorgesehen sind. Diese Röhrchen 11 sind mit ihren Breitschlitzen quer zur Transportrichtung P der Pack- stoffbahn PB gegen den oberen Randbereich RB unterhalb der Packstoffbahnebene E des jeweiligen Bechers B gerichtet.
Sämtlich Rollen 10 auf sitzen auf gemeinsamen, von einem kleinen Schrittmotor M im Takt antreibbaren Wellen 10'. Diese Anschrumpfung der Randbereiche RB kann minimal sein, da es in diesem Bereich nur darum geht, den Durchmesser der Dekorhülsen DH geringfügig nur soweit zu reduzieren, daß deren oberen Randbereiche RB zur festgespannten Anlage an den Bechern B kommen, d.h., mit dem eigentlichen Aufschrumpfen der Dekorhülsen über ihre ganze Länge hat dieser Vorgang noch nichts zu tun.

Bezüglich der stark schematisierten Situationsdarstellung in Fig.5, in der alle an der Übergabe und der Fixierung der Dekorhülsen DH einschließlich der Packstoffbahn PB selbst beteiligten Elemente berücksichtigt sind, ist darauf hinzuweisen, daß sich diese Elemente in unterschiedlichen Ebenen befinden und in Verbindung mit den Fig.3,4 zu betrachten sind. Die dargestellte Anordnung der Rollen 10 und der Breitschlitzröhrchen 11 nimmt dabei Rücksicht einerseits auf die Förderrichtung P'des Quertransporteurs 9 und andererseits auf die Förderrichtung P der sich darüber erstreckenden Packstoffbahn PB, an der in dieser Darstellung vier Becherlängsreihen R ausgeformt sind.

Obgleich weitgehend selbsterklärend, sei bezgl. der Darstellungen in den Fig. 6 bis 9 Folgendes kurz erläutert:
Fig.6 zeigt eine mit fixierten, aber noch nicht aufgeschrumpften Sleeves DH. bestückte Becherquerreihe über der an diese von unten mit geeigneten mechanischen Elementen im Takt heranzustellende Bedampfungskammer 3 gemäß Fig.6A.
Fig.7 zeigt die an die Becherquerreihe unter Ausbildung eines Umfangsspaltes 7 zur Dampfabströmung von unten herangefahrene Bedampfungskammer 3.
Fig.8 entspricht der Bedampfungs- und Aufschrumpfphase mit schon weitgehend angeschrumpften Sleeves und Fig.9 zeigt die entsprechend behandelte Becherquerreihe R mit den aufgeschrumpften Sleeves DH, die je nach Längenbemessung gegf. auch einen Rand des Becherbodens, wie dargestellt mit erfassen können.

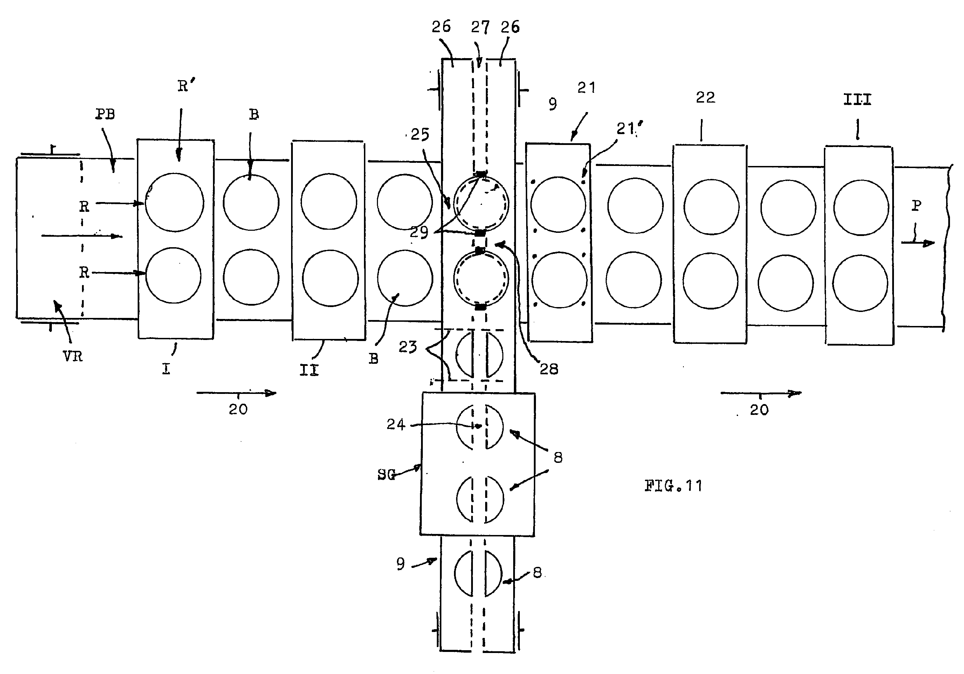

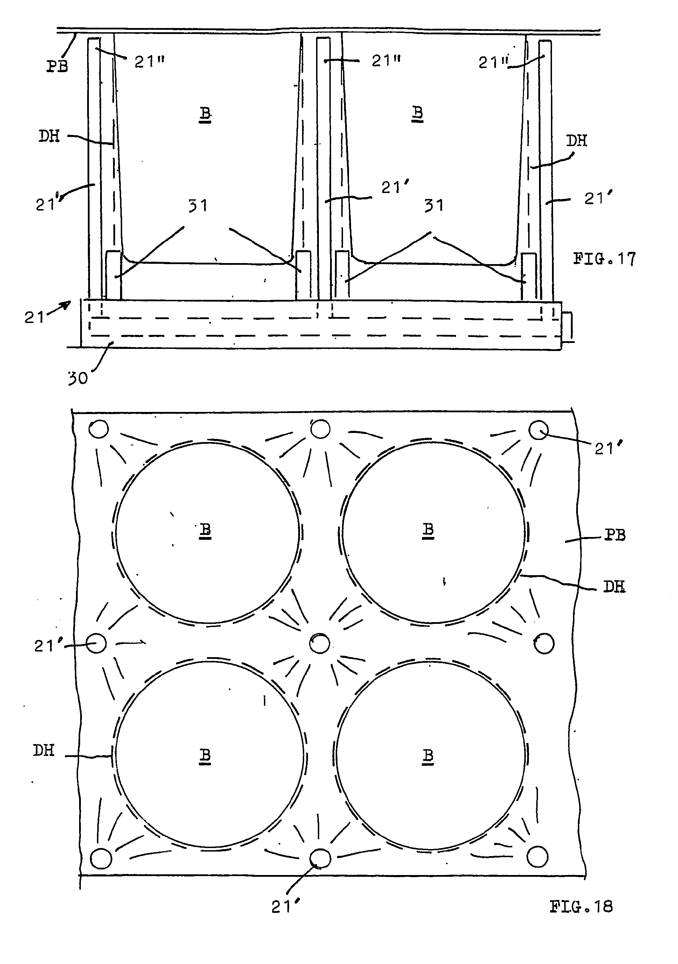

Unter Beibehaltung des gleichen Prinzips wird unter Bezug auf die Fig.11 bis 20 eine etwas abgewandelte und bevorzugte Aus führungsform der Vorrichtung nachfolgend beschrieben, auf die auch der unabhängige Anspruch 9 Bezug nimmt.

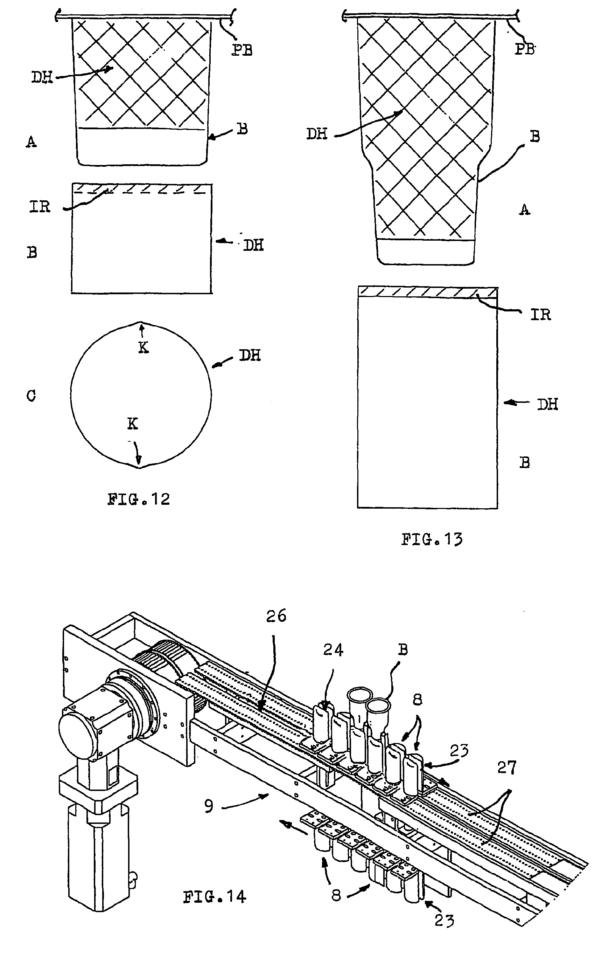

In Fig.11 ist stark schematisiert und in Draufsicht wiederum eine FFS-Verpackungsmaschine dargestellt, bei der die hier interessierenden Dekoreinrichtungen, angeordnet zwischen der Füll- und Schließstation II,III unterhalb der Förderstrecke 20 der FFS-Verpackungsmaschine angeordnet sind. Mit diesen Einrichtungen werden die von der Verpackungsmaschine an einer getaktet durchgeförderten Packstoffbahn PB in Reihen R quer zur Förderrichtung P ausgeformten und gefüllten Becher B mit unter Wärmeeinwirkung aufschrumpfbaren und an ihrem oberen Innenrand IR (siehe Fig.12,13) mit Hotmelt versehenen Sleeves S rundum etikettiert. Die Querreihen R' sind der Einfachheit halber bei diesem Ausführungsbeispiel nur aus zwei Bechern B bestehend dargestellt.

Ferner sind bezeichnet mit SG ein Sleeveerzeuger, mit 9 der quer zur Förderstrecke 20 orientiert angeordneter Endlos-Zuförderer bzw. Quertransporteur, mit 25 der Übergabebereich, mit VR eine Packstoffbandvorratsrolle und mit I die Tiefziehstation zur Einformung der Becher B in die Packstoffbahn PB. Mit 21,22 sind hier schließlich die Fixier- und die Aufschrumpfeinrichtungen bezeichnet. Der in Fig.11 bspw. angedeutete Quertransporteur 9 ist auch hier wie in den Fig.3,4 ebenfalls stark verkürzt dargestellt.
Die Anzahl der Aufsteckdorne 8 am Endlosförderer 12 beträgt ein Mehrfaches der Anzahl der in einer Querreihe befindlichen Becher B, d.h., der Endlosförderer 12 des Quertransporteurs 9 weist bei bspw. sechs in einer Querreihe R' zu bestückenden Bechern insgesamt mindestens vierundzwanzig Dorne bzw. Aufsteckaufnahmen auf.

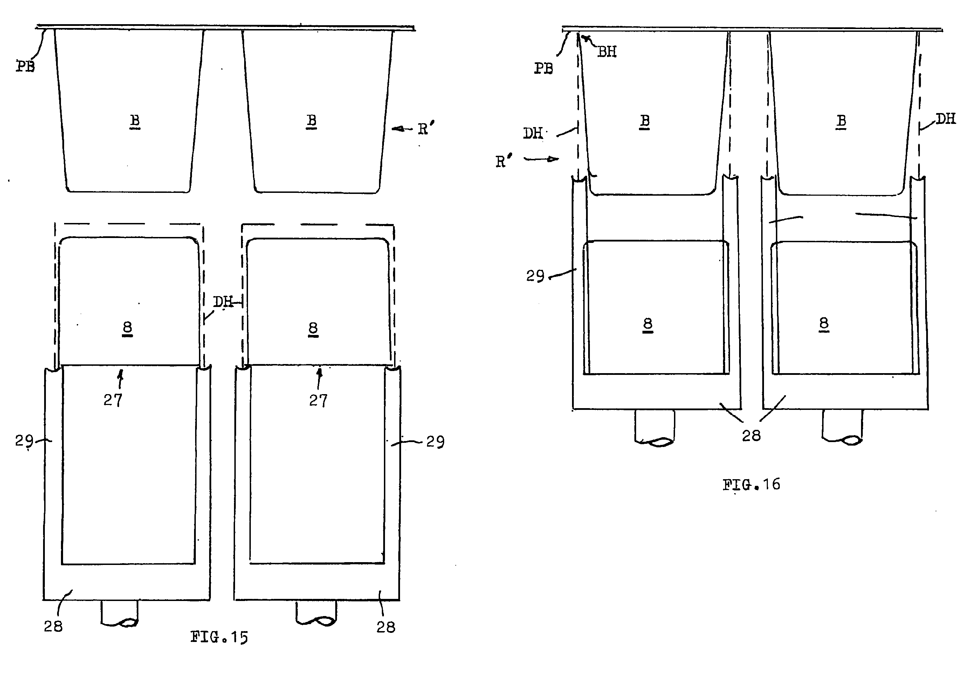

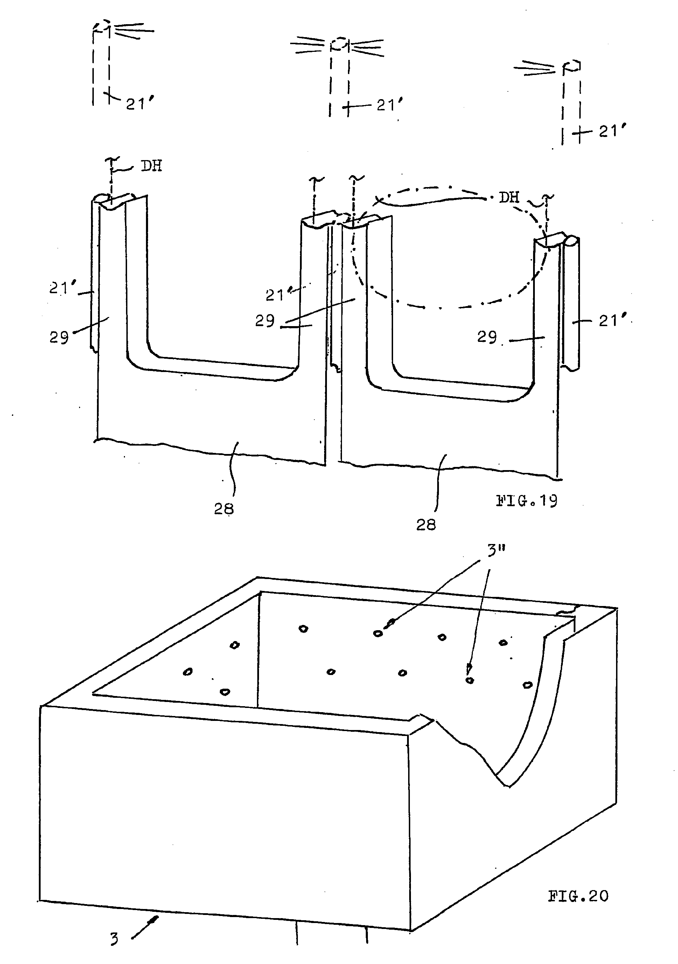

Für diese Ausführungsform der Etikettiereinrichtungen ist unter Verweis auf Fig.11 bis 20 wesentlich, daß die als Dorne 8 ausgebildeten Sleeveraufnahmen des Endloszuförderers 9 an ihren zur Förderrichtung der Packstoffbahn PB parallele Flanken 23 mit oben und unten offen endenden Spalten 24 versehen sind.Im Sleeve-Übergabebereich 25 ist dabei unter der getaktet bewegbaren, aus zwei einen Durchgriffsspalt 26 einschließenden, synchron laufenden Strängen 27 bestehenden Zuförderer 9 ein getaktet auf und ab bewegbarer Schieber 28 als Sleeveheber angeordnet. Dieser Sleeveheber bzw. Schieber 28 (siehe insbesondere Fig.15,16) ist mit zwei in die Spalten 24 der Dorne 8 passenden und zu diesen fluchtenden Heberfortsätzen 29 versehen. Hinter der als getaktete Heißluftbeaufschlagung ausgebildeten Fixiervorrichtung 21 ist eine getaktet und gegen die Packstoffbahn PB auf und ab verstellbare, gegen die Becherreihe R' offene und getaktet mit Dampf beschickbare Bedampfungskammer 3 (siehe Fig.20) als Aufschrumpfeinrichtung 22 angeordnet.

Die Fig.12A-12C und 13A,13B stellen mögliche, schwach konische Becherformen dar, wobei die aufzuschrumpfenden Sleeves DH mit dargestellt sind einschließlich einer Querschnittdarstellung der Sleeves in Fig.12C, in welcher schwach doppelt bei K angeknickten Form diese aus dem Sleever SG kommen und direkt auf die Dorne 8 bzw. Sleeveaufnahmen des Endloszuförderers 9 gelangen, der in Fig.14 detaillierter und perspektivisch dargestellt ist. Beim Becher B gemäß Fig.l2A handelt es sich um einen solchen üblicher Form und beim Becher B gemäß Fig.13A um einen, wie bspw. dargestellt, abgestuften Becher. Die in den Fig.12,13 mit dargestellten Sleeves DH sind an ihrem oberen Innenrand IR mit einer Hotmeltbeschichtung versehen, die zur Fixierung der Sleeves unmittelbar unter der Erstreckungsebene der Packstoffbahn PB dienen, was noch näher erläutert wird.

Die in Fig.14 dargestellte, zweiteilige Form der Dorne 8 ist nicht zwingend, d.h., die Dorne 8 könnten auch an ihren Flanken 23 mit entsprechende Nuten für den Eingriff der Heberfortsätze 29 versehen sein.
Die Fig.15,16 zeigen eine aus jeweils zwei Bechern B bestehende Querreihe R', wobei Fig.15 die noch auf den Dornen 8 sitzenden Sleeves DH und die noch in Tiefststellung befindlichen Schieber 28 mit ihren Heberfortsätzen 29 zeigt, während in Fig.16 die Übergabe der Sleeves DH an die Becher B vollzogen ist. Der Umfang des Bechers B unmittelbar unter der Packstoffbahn PB und der Durchmesser der Sleeves DH sind so abgestimmt bemessen, daß die Sleeves mit ihrer Hotmeltbeschichtung in der Position gemäß Fig. 15 an den Becherhälsen BH haften bleiben. Die in Fig.19 separat dargestellten Schieber 28 können auch zu einem Schieber zusammengefaßt sein, der dann, orientiert am dargestelten Ausführungsbeispiel nur mit drei Heberfortsätzen 29 zu versehen ist, deren Enden, wie dargestellt, vorteilhaft zur besseren Erfassung der unteren Ränder, wie in Fig.19 nur strichpunktiert angedeutet, der Sleeves hohlkehlenartig ausgebildet sind. Abgesehen von der Auf- und Abbewegung des Schiebers 28, der mit einer Wandstärke von 3 - 5 mm auskommt und damit problemlos in den engen Raum zwischen den Bechern B eingefahren werden kann, sind bei der Übergabe der Sleeves keinerlei andere Bewegungen erforderlich, und es hat sich in überraschender Weise gezeigt, daß sich auf diese Art trotz geringer Folienstärke der Sleeves diese ohne weiteres an den Bechern B in Position bringen lassen.

Die so bestückten Becher B gelangen nun ein oder mehrere Föderschritte weiter in die in den Fig.11 und Fig.17,18 schematisch dargestellte Fixierungseinrichtung 21, in der die Hotmeltbeschichtungen an den oberen Rändern der Sleeves durch einen Heißluftstoß zum Haften an den Becherhälsen BH gebracht werden, womit die Position der Sleeves derart fixiert ist, daß sich die Sleeves bei der nachfolgenden Aufbringung der Schrumpfwärme nicht mehr versetzen bzw. verziehen können. Die stoßartig gesteuerte Heißluftbeaufschlagung erfolgt durch mindesten zwei sich diagonal gegenüberstehende Röhrchen 21', die an ihren oberten Enden 21" mit dafür geeigneten und orientierten, gegen den Becher gerichtete, nicht besonders dargestellten Ausdüsöffnungen versehen sind.
Vorteilhaft ist die daraus gebildete ganze Fixiereinrichtung 21 ebenfalls getaktet auf und ab bewegbar ausgebildet, und zwar um beim Zu- und Weitertransport der Packstoffbahn PB die Sleeves nicht mit den heißen Röhrchen 21' in Berührung kommen zu lassen und um bei einem etwaigen Maschinenstop die Strahlungswärme der heißen Röhrchen von den Bechern B fernzuhalten. Außerdem ist die Fixiereinreichtung 21 an einem Röhrchenträger 30 mit einem derart eingestellten Stützring 31 versehen, daß dieser die Sleeves entweder in ihre genaue Postion zum jeweiligen Becher schiebt oder in dieser Position hält. Gemäß Fig.19 können die die Fixiereinrichtung bildenden Röhrchen 21' gegf. auch schon in die Sleeveübergabeeinrichtung integriert sein, wobei nach Aufschub der Sleeves DH die Röhrchen 21' in ihre Wirkstellung nachgeschoben werden.

Ebenfalls ein oder mehrere Förderschritte weiter folgt dann die Aufschrumpfeinrichtung 22(siehe Fig.11), die, wie in Fig.20 schematisch dargestellt, in Form einer gegen die zu behandelnde Becherquerreihe R' offene aber ringsum und auch bodenseitig geschlossene Bedampfungskammer 3 mit einem entsprechend steuerbaren Dampfanschluß (nicht dargestellt) versehen ist. Diese die Aufschrumpfeinrichtung 22 bildende und mit Dampfaustrittsöffnungen 3" versehene Bedampfungskammer 3 ist mit einer geeigneten Stellmechanik (nicht dargestellt) im Förderschrittakt der Packstoffbahn PB auf und ab verstellbar und sorgt durch ihre enge Umfassung einer Becherquerreihe R' für eine konzentrierte Wärmebeaufschlagung der Sleeves DH und damit für deren schlagartige Aufschrumpfung auf die Becher B.

## Patentansprüche

1. Verfahren zur Seitenwand-Dekoration von per Tiefziehen im Schritttakt an einer Packstoffbahn (PB) in mindestens einer in Förderrichtung erstreckten Längsreihe (R) ausgeformten Verpackungsbehältnissen (B), wie Becher od.dgl., deren Seitenwände (S) mit einer im Wesentlichen zylindrischen, unter Wärmebeaufschlagung an die Behältnisform anschrumpfbaren Sleeves (DH) durch Aufstülpen von unten umfaßt und die Sleeves vor ihrem Aufschrumpfen mit ihrem oberen Rand am Behältnis (B) unterhalb der Packstoffbahnerstreckungsebene (E) fixiert werden,
**dadurch gekennzeichnet,**
**daß** nach der Anbringung und Fixierung der von einem Sleever (SG) zugeförderten Sleeves (DH) am Verpackungsbehältnis (B) dieses im Schritttakt mindestens einer Bedampfungs- und Aufschrumpfphase zugeführt und in dieser unter Abschirmung des Behältnisses (B) und des Zwischenraumes zwischen Behältnis (B) und Sleeve (DH) während der zeit zwischen zwei Förderschritttakten die Dekorhülse (DH) auf ihrer Außenfläche mit überhitztem Wasserdampf beaufschlagt und damit die Dekorhülse aufgeschrumpft wird, wobei vom kurzzeitig aufgebrachten, überhitzten Dampf mindestens ein Teil während der Bedampfung unmittelbar unter der Erstreckungsebene (E) der Packstoffbnahn (PB) aus seinem Wirkbereich abgeführt wird.

2. Verfahren nach Anspruch 1,
**dadurch gekennzeichnet,**
**daß** die Fixierung des oberen Randbereiches (RB) der Sleeves (DH) an den Verpackungsbehältnissen (B) mit entsprechend temperierter Heißluft bewirkt wird, sobald der Randbereich (RB) der Sleeves (DH) seine Position unterhalb der Packstoffbahnebene (E)erreicht.

3. Verfahren nach Anspruch 1 oder 2,
**dadurch gekennzeichnet,**
**daß** bei Anwendung einer zweiten Bedampfungs- und Schrumpfphase die zweite Phase nach Einschaltung eines Leerschritttaktes durchgeführt wird.

4. Verfahren nach einem der Ansprüche 1 bis 3,
**dadurch gekennzeichnet,**
**daß** die Beaufschlagung mit überhitztem Dampf bei bereits gefüllten Verpackungsbehältnissen (B) durchgeführt wird.

5. Vorrichtung zur Durchführung des Verfahrens nach Anspruch 1, bestehend aus einer FFS-Verpackungsmaschine mit entsprechenden längs der Packstoffbahnförderstrecke (20) angeordneten Bearbeitungsstationen für die im Schritttakt durchzufördernde Packstoffbahn (PB), nämlich Formstation (I), Füllstation (II), Schließstation (III) und mit Einrichtungen zur Anbringung und Wärmebeaufschlagung der Sleeves (DH),
**dadurch gekennzeichnet,**
**daß** den vor oder nach der Füllstation (II) angeordneten Einrichtungen in Form eines von einem Sleever (SG) beschickbaren, mit Sleeveraufnahmen (8) versehenen Querförderers (9) zur Anbringung der Sleeves (DH) mindestens eine Bedampfungs- und Schrumpfstation (IV) nachgeschaltet ist, die aus mindestens einem mit einer Dampfzufuhr (1) versehenen, mindestens eine mit einem Sleeve (DH) bestücktes Verpackungsbehältnis (B) mit Spiel umschließende Bedampfungkammer (3) gebildet und deren Boden (4) periphär mit in die Zwischenräume (5) zwischen den mit den Sleeves (DH) bestückten Behältnissen (B) gerichteten Öffnungen (6) versehen ist, wobei die im Wesentlichen um die Höhe (H) des Verpackungsbehältnisses (B) auf und ab bewegbare Bedampfungskammer (3) in eine Endstellung zur Packstoffbahnebene (E) anhebbar ist und die Bedampfungskammer (3)in angehobener Endstellung mit ihrem oberen Rand (3') und der Packstoffbahn (PB) einen Dampfabströmringspalt (7) bildet.

6. Vorrichtung nach Anspruch 5,
**dadurch gekennzeichnet,**
**daß** im mit dem Dampfanschluß (1) versehenem Bodenbereich der Bedampfungskammer (3) die Heizelemente (2) zur Erzeugung von überhitztem Dampf mit angeordnet sind.

7. Vorrichtung nach Anspruch 5 oder 6,
**dadurch gekennzeichnet,**
**daß** die unter der Packstoffbahn (PB) in Form eines mit Sleevesaufnahmen (8) versehenen Quertransporteurs (9) ausgebildeten Einrichtungen zur Anbringung der Dekorhülsen (DH) am Verpackungsbehältnis (B) mit an die Dekorfolienhülsen (DH) gesteuert anleg- und drehbaren Transportrollen (10) versehen sind.

8. Vorrichtung nach einem der Ansprüche 5 bis 7,
**dadurch gekennzeichnet,**
**daß** der Quertransporteur (9) mit mit überhitzten Dampf gesteuert beschickbaren Breitschlitzdüsen (11) versehen ist, die quer zur Transportrichtung der Packstoffbahn gegen den oberen Randbereich (RB) unterhalb der Packstoffbahnebene (E) des jeweiligen Verpackungsbehältnisses (B) gerichtet sind.

9. Vorrichtung zur Durchführung des Verfahrens nach Anspruch 1, bestehend aus einer FFS-Verpackungsmaschine mit entsprechenden längs der Packstoffbahnförderstrecke (20) angeordneten Bearbeitungsstationen für die im Schritttakt durchzufördernde Packstoffbahn (PB), nämlich Formstation (I), Füllstation (II), Schließstation (III) und mit Einrichtungen zur Anbringung und Wärmebeaufschlagung der Sleeves (DH),
**dadurch gekennzeichnet,**
**daß** den vor oder nach der Füllstation (II) angeordneten Einrichtungen in Form eines von einem Sleever (SG) beschickbaren, mit Sleedveraufnahmen (8) versehenen Querförderers (9) zur Anbringung und Wärmebeaufschlagung der Sleeves (DH) mindestens eine Bedampfungs- und Schrumpfstation (IV) nachgeschaltet ist und daß die als Dorne ausgebildeten Sleeveraufnahmen (8) des Querförderers (9) an ihren zur Förderrichtung der Packstoffbahn (PB) parallelen Flanken (23) mit oben und unten offen endenden Spalten (24) versehen sind und im Sleeve-Übergabebereich (25) unter der getaktet bewegbaren, aus zwei einen Durchgriffsspalt (27) einschließenden Strängen (26) bestehenden Querförderers (9) ein getaktet auf und ab bewegbarer Schieber (28) als Sleeveheber angeordnet ist, der mit zwei in die Spalte (24) passenden und zu diesen fluchtenden Heberfortsätzen (29) versehen ist, und daß hinter einer als getaktete Heißluftbeaufschlagung ausgebildeten Fixiereinrichtung (21) eine getaktet und gegen die Packstoffbahn (PB) auf und ab verstellbare, gegen die Becherreihe (R) offene und getaktet mit Dampf gesteuert beschickbare Bedampfungskammer (3) als Aufschrumpfeinrichtung (22) angeordnet ist, die in angehobener Endstellung mit ihrem oberen Rand (3') und der Packstoffbahn (PB) einen Dampfabströmringspalt (7) bildet.

10. Vorrichtung nach Anspruch 9,
**dadurch gekennzeichnet,**
**daß** die Fixiereinrichtung (21) aus mindestens zwei, mit ihren Heißluftausdüsöffnungen gegen die Becherwand (S) gerichteten Röhrchen (21') gebildet ist und daß die Fixiereinrichtung (22) mit ihren Röhrchen (21') getaktet in den Freiraum zwischen den Bechern (B) auf und ab verstellbar angeordnet und ausgebildet ist.

11. Vorrichtung nach Anspruch 9 oder 10,
**dadurch gekennzeichnet,**
**daß** die Fixiereinrichtung (21) mit einem Stützring (31) zur genauen Positionierung der Sleeves (S) zu den Bechern (B) ausgestattet ist.

12. Vorrichtung nach Anspruch 9,
**dadurch gekennzeichnet,**
**daß** die für die Heißluftbeaufschlagung bestimmten Röhrchen (21') der Fixiereinrichtung (21) im Sleeveübergabebereich (25) zwischen den Sleevehebern integriert und getaktet auf und ab verstellbar angeordnet sind.

13. Vorrichtung nach einem der Ansprüche 9 bis 12,
**dadurch gekennzeichnet,**
**daß** die Bedampfungskammer (3) in Form eines mindestens eine Becherquerreihe (R') eng umschließenden Kastens ausgebildet ist und daß die Wände der Bedampfungskammer (3) zur Dampfführung als Hohlwände ausgebildet und diese innenwandig ringsum mit mehreren Dampfausströmöffnungen (3') versehen sind.

## Claims

1. A method for decorating the lateral walls of packaging containers (B) such as cups or the like formed by deep drawing or thermoforming in a clocked manner on a packaging material strip (PB) in at least one longitudinal row (R) extending in the conveying direction, the lateral walls (S) whereof are enclosed by slipping onto them from below a substantially cylindrical sleeve (DH) that can be shrunk onto the shape of the container by exposure to heat and before the sleeves are shrunk on, they are fixed with their upper edge on the container (B) below the plane of extension (E) of the packaging material strip,
**characterised in**
**that** after the sleeve (DH) supplied by a sleever (SG) has been applied and fixed on the packaging container (B), this is supplied in the step cycle to at least one vaporisation and shrinking-on phase and in this phase, the outer surface of the decorative sleeve (DH) is exposed to superheated steam whilst the container (B) and the intermediate space between the container (B) and the sleeve (DH) is shielded during the time between two conveying step cycles and the decorative sleeve is thereby shrunk on, wherein at least some of the briefly applied superheated steam is removed from its effective area during vaporisation directly below the plane of extension (E) of the packaging material strip (PB).

2. The method according to claim 1,
**characterised in**
**that** the fixing of the upper edge zone (RB) of the sleeve (DH) on the packaging containers (B) is effected with suitably temperature-controlled hot air as soon as the edge zone (RB) of the sleeve (DH) reaches its position below the plane (E) of the packaging material strip.

3. The method according to claim 1 or 2,
**characterised in**
**that** when a second vaporisation and shrinking phase is used, the second phase is carried out after initiating an empty step cycle.

4. The method according to any one of claims 1 to 3,
**characterised in**
**that** the exposure to superheated steam is carried out in the case of packaging containers (B) which have already been filled.

5. A device for carrying out the method according to claim 1, consisting of an FFS packaging machine with corresponding processing stations for the packaging material strip (PB) to be conveyed in the step cycle, disposed along the conveying distance (20) of the packaging material strip, namely forming station (I), filling station (II), closing station (III) and comprising devices for application and action of heat on the sleeves (DH),
**characterised in**
**that** at least one vaporisation and shrinking station (IV) is located downstream of the devices disposed before or after the filling station (II) in the form of a transverse conveyor (9) provided with sleever receptacles (8) which can be charged by a sleever (SG) for application of the sleeve (DH), said vaporisation and shrinking station being formed from at least one vaporisation chamber (3) provided with a steam supply (1) and enclosing with play at least one packaging container (B) fitted with a sleeve (DH) and its base (4) being provided peripherally with openings (6) directed in the intermediate spaces (5) between the containers (B) fitted with the sleeves (DH), wherein the vaporisation chamber (3) which can be moved up and down substantially by the height (H) of the packaging container (B) can be raised into its end position to the level (E) of the packaging material strip and in its raised end position, the vaporisation chamber (3) forms a steam flow annular gap (7) with its upper edge (3') and the packaging material strip (PB).

6. The device according to claim 5,
**characterised in**
**that** the heating elements (2) for generating superheated steam are arranged in the bottom region of the vaporisation chamber (3) provided with the steam connection (1).

7. The device according to claim 5 or 6,
**characterised in**
**that** the devices for applying the decorative sleeves (DH) to the packaging container (B) which are formed below the packaging material strip (PB) in the form of a transverse transporter (9) provided with sleeve receptacles (8), are provided with transporting rollers (10) which can be applied and rotated in a controlled manner on to the decorative film sleeves (DH).

8. The device according to any one of claims 5 to 7,
**characterised in**
**that** the transverse transporter (9) is provided with wide-slitted nozzles (11) which can be charged with superheated steam in a controlled manner and which are aligned transversely to the direction of transport of the packaging material strip towards the upper edge zone (RB) below the plane of the packaging material strip (E) of the respective packaging container (B).

9. The device for carrying out the method according to claim 1, consisting of an FFS packaging machine with corresponding processing stations for the packaging material strip (PB) to be conveyed in the step cycle, disposed along the conveying distance (20) of the packaging material strip, namely forming station (I), filling station (II), closing station (III) and comprising devices for application and action of heat on the sleeves (DH),
**characterised in**
**that** at least one vaporisation and shrinking station (IV) is located downstream of the devices disposed before or after the filling station (II) in the form of a transverse conveyor (9) provided with sleever receptacles (8) which can be charged by a sleever (SG) for application and action of heat on the sleeve (DH), and that the sleever receptacles (8) of the transverse conveyor (9), formed as mandrels, are provided with gaps which are open at the top and at the bottom, on their flanks (23) parallel to the conveying direction of the packaging material strip (PB) and that in the sleeve transfer zone (25) below the transverse conveyor (9) consisting of two strands (26) enclosing a through gap (27), there is provided a slider (28) which can be moved up and down in a clocked manner as a sleeve lifter, which is provided with two lifter continuations (29) which fit in the gap (24) and are in alignment thereto and that behind a fixing device (21) formed as clocked exposure to hot air, a vaporisation chamber (3) which can be adjusted up and down in a clocked manner and towards the packaging material strip (PB) and which can be charged with steam in a controlled manner, is arranged as a shrinking-on device (22) which forms a steam flow annular gap (7) in its raised end position with its upper edge (3') and the packaging material strip (PB).

10. The device according to claim 9,
**characterised in**
**that** the fixing device (21) is formed from at least two tubes (21') having their hot air outlet openings directed towards the cup wall (S) and that the fixing device (22) with its tubes (21') is arranged and configured so that it can be adjusted up and down in a clocked manner in the free space between the cups (B).

11. The device according to claim 9 or 10,
**characterised in**
**that** the fixing device (21) is fitted with a supporting ring (31) for the exact positioning of the sleeve (S) to the cups (B).

12. The device according to claim 9,
**characterised in**
**that** the tubes (21') of the fixing device (21) intended for the exposure to hot air are integrated in the sleeve transfer zone (25) between the sleeve lifters and are arranged so that they can be adjusted up and down in a clocked manner.

13. The device according to any one of claims 9 to 12,
**characterised in**
**that** the vaporisation chamber (3) is configured in the form of a box which tightly encloses at least one transverse row of cups (R') and that the walls of the vaporisation chamber (3) are configured as hollow walls for guiding steam and that these are provided with a plurality of steam outlet openings (3') around the inner wall.

## Revendications

1. Procédé pour la décoration des parois latérales de récipients d'emballage (B) tels que des gobelets ou autres, formés par emboutissage, de façon cadencée, à partir d'une bande de matériau d'emballage (PB) et disposés en au moins une rangée longitudinale (R) s'étendant dans la direction de transport, et dont les parois latérales (S) sont entourées par le bas avec des manchons (DH) essentiellement cylindriques enfilés sur la forme de récipient et pouvant être frettés en étant soumis à la chaleur, et les manchons (DH) étant fixés par leur bord supérieur sur le récipient (B), en-dessous de la région (E) d'extension de bande de matériau d'emballage,
**caractérisé en ce que**
suite à la pose et à la fixation d'un manchon (DH) guidé par une machine de pose (SG) sur le récipient d'emballage (B), celui-ci est guidé de façon cadencée vers au moins une phase de vaporisation et de frettage et soumis à de la vapeur d'eau surchauffée sur leur surface extérieure, tout en protégeant le récipient (B) et l'espace intermédiaire entre le récipient (B) et le manchon (DH) entre deux pas de cadence d'avancement des gaines décoratives (DH), une partie au moins de la vapeur surchauffée, appliquée rapidement, étant évacuée de la région active pendant la vaporisation, directement sous la région d'extension (E) de la bande de matériau d'emballage (PB).

2. Procédé selon la revendication 1 ou 2,
**caractérisé en ce que**
la fixation de la région du bord supérieur (RB) des manchons (DH) sur les récipients d'emballage (B) avec de l'air chaud tempéré de manière appropriée est effectuée dès que la région de bord (RB) des manchons (DH) atteind sa position en-dessous de la région (E) de bande de matériau d'emballage.

3. Procédé selon la revendication 1 ou 2,
**caractérisé en ce que**
lors de l'application d'une deuxième phase de vaporisation et de frettage, la deuxième phase se déroule après un pas de cadence à vide.

4. Procédé selon l'une des revendications 1 à 3,
**caractérisé en ce que**
l'application de la vapeur chaude est effectuée sur des récipients d'emballage (B) déjà remplis.

5. Dispositif pour l'exécution du procédé selon la revendication 1, comprenant une machine d'emballage FFS avec des stations de traitement correspondantes pour la bande de matériau d'emballage (PB) à conduire en cadence, disposées le long de la voie de transport (20) de la bande de matériau d'emballage, notamment une station de formage (I), une station de remplissage (II), une station de fermeture (III), ainsi qu'avec des installations destinées à la pose et au chauffage des manchons (DH),
**caractérisé en ce que**
au moins une station de vaporisation et de frettage (IV) est installée après les dispositifs disposés avant ou après la station de remplissage (II), qui se présentent sous la forme d'un convoyeur transversal (9) équipé d'admissions de manchons (8) et alimenté par une machine de pose (Sleever) (SG) pour la pose des manchons (DH), ladite station de vaporisation et de frettage étant formée d'au moins une chambre de vaporisation (3) pourvue d'une alimentation en vapeur (1) et entourant au moins un récipient d'emballage (B) équipé d'un manchon (DH), en respectant une marge, et dont le fond (4) est pourvu d'orifices (6) disposés de façon périphérique et orientés vers les espaces intermédiaires (5) entre les récipients d'emballage (B) équipés de manchons (DH), la chambre de vaporisation (3) déplaçable vers le haut et vers le bas, quasiment sur toute la hauteur (H) du récipient d'emballage (B) peut être élevée dans une position finale de la région (E) de bande de matériau d'emballage, et **en ce que** la chambre de vaporisation (3) forme, dans sa position finale élevée, une fente circulaire de vaporisation (7) avec son bord supérieur (3') et la bande de matériau d'emballage (PB).

6. Dispositif selon la revendication 5,
**caractérisé en ce que**
les éléments chauffants (2) servant à produire la vapeur surchauffée sont disposés dans la région de fond de la chambre de vaporisation (3), qui est équipée du raccordement de vapeur (1).

7. Dispositif selon la revendication 5 ou 6,
**caractérisé en ce que**
les installations situées sous la bande de matériau d'emballage (PB), conçues sous la forme d'un convoyeur transversal (9) équipé d'admissions de manchons (8), pour la pose des gaines décoratives (DH) sur les récipients d'emballage (B), sont équipées de rouleaux de transport (10) rotatifs et applicables qui sont dirigés sur les gaines décoratives (DH).

8. Dispositif selon l'une des revendications 5 à 7,
**caractérisé en ce que**
le convoyeur transversal (9) est pourvu de buses à fente large (11) pouvant être alimentées de façon commandée en vapeur surchauffée, qui sont orientées de manière transversale par rapport à la direction de transport de la bande de matériau d'emballage, vers la région du bord supérieur (RB) en-dessous de la région (E) de bande de matériau d'emballage de chacun des récipients d'emballage (B).

9. Dispositif pour l'exécution du procédé selon la revendication 1, constitué d'une machine d'emballage FFS avec des stations de traitement correspondantes pour la bande de matériau d'emballage (PB) conduite en cadence, qui sont disposées le long de la voie de transport (20) de la bande de matériau d'emballage, notamment une station de formage (I), une station de remplissage (II), une station de fermeture (III), ainsi qu'avec des installations pour la pose et le chauffage des manchons (DH),
**caractérisé en ce que**
au moins une station de vaporisation et de frettage (IV) est installée après les dispositifs disposés avant ou après la station de remplissage (II), qui se présentent sous la forme d'un convoyeur transversal (9) équipé d'admissions de manchons (8) et alimenté par une machine de pose (Sleever) (SG) pour la pose des manchons (DH), et **en ce que** les admissions de manchons (8) du convoyeur transversal (9), conçues comme des épines, sont pourvues de fentes (24) se ouvertes sur le haut et sur le bas, qui sont situées sur leurs bords (23) parallèles à la direction de transport de la bande de matériau d'emballage (PB), et **en ce qu'**un poussoir (28) déplaçable de façon cadencée vers le haut et vers la bas, est disposé en tant qu'élévateur de manchons dans la région de transmission des manchons (25), en-dessous du convoyeur transversal (9) déplaçable de façon cadencée, qui est constitué de deux boudins (26) avançant de manière synchronisée et comprenant une fente traversante (27), ledit poussoir étant pourvu de deux saillies d'élévation (29) adaptées pour s'introduire dans les fentes (24) et alignées avec celles-ci, et **en ce que** derrière un dispositif de fixation (21) conçu comme un moyen d'application d'air chaud cadencé se trouve une chambre de vaporisation (3) en tant que dispositif de frettage (22), ouverte en direction de la rangée (R) de gobelets, pouvant être alimentée en vapeur de façon cadencée et déplacée de manière cadencée vers le haut et vers le bas contre la bande de matériau d'emballage (PB), et formant, dans sa position finale élevée, une fente circulaire de vaporisation (7) avec son bord supérieur (3') et la bande de matériau d'emballage (PB).

10. Dispositif selon la revendication 9,
**caractérisé en ce que**
le dispositif de fixation (21) est constitué d'au moins deux petits tubes (21') orientés contre la paroi des gobelets (S) avec leurs orifices d'application d'air chaud, et **en ce que** le dispositif de fixation (21) avec ses petits tubes (21') est disposé et conçu de manière à pouvoir être déplacé en cadence vers le haut et vers le bas dans l'espace intermédiaire situé entre les gobelets (B).

11. Dispositif selon la revendication 9 ou 10,
**caractérisé en ce que**
le dispositif de fixation (21) est équipé d'un anneau de support (31) pour le positionnement exact des manchons (S) par rapport aux gobelets (B).

12. Dispositif selon la revendication 9,
**caractérisé en ce que**
les petits tubes (21') du dispositif de fixation (21), destinés à l'application d'air chaud, sont disposés de manière à pouvoir se déplacer en cadence vers le haut et vers le bas et sont intégrés entre les élévateurs de manchons dans la région de transmission des manchons (25).

13. Dispositif selon l'une des revendications 9 à 12,
**caractérisé en ce que**
la chambre de vaporisation (3) est conçue sous la forme d'un caisson entourant étroitement au moins une rangée transversale (R') de gobelets, et **en ce que** les parois de la chambre de vaporisation (3) sont conçues comme des parois creuses en vue du guidage de la vapeur et pourvues de plusieurs ouvertures de sortie de vapeur (3') sur leur pourtour intérieur.
